(19) Europäisches Patentamt
European Patent Office
Office européen des brevets

(11) **EP 2 456 062 B1**

(12) **EUROPEAN PATENT SPECIFICATION**

(45) Date of publication and mention
of the grant of the patent:
**24.10.2018 Bulletin 2018/43**

(51) Int Cl.:
***H02M 7/12*** *(2006.01)*          ***H02M 1/42*** *(2007.01)*

(21) Application number: **10799632.4**

(22) Date of filing: **14.07.2010**

(86) International application number:
**PCT/JP2010/004584**

(87) International publication number:
**WO 2011/007568 (20.01.2011 Gazette 2011/03)**

(54) **POWER SUPPLY DEVICE**

STROMVERSORGUNGSVORRICHTUNG

DISPOSITIF D'ALIMENTATION

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **14.07.2009 JP 2009165246**

(43) Date of publication of application:
**23.05.2012 Bulletin 2012/21**

(73) Proprietor: **Mitsubishi Heavy Industries, Ltd.
Tokyo 108-8215 (JP)**

(72) Inventors:
• **SHIMIZU, Kenji**
 **Tokyo 108-8215 (JP)**

• **SUMITO, Kiyotaka**
 **Tokyo 108-8215 (JP)**
• **KANIE, Tetsuo**
 **Tokyo 108-8215 (JP)**
• **SATO, Takeshi**
 **Tokyo 108-8215 (JP)**

(74) Representative: **Studio Torta S.p.A.
Via Viotti, 9
10121 Torino (IT)**

(56) References cited:
**JP-A- 2001 186 770     JP-A- 2001 186 770
JP-A- 2006 174 689     JP-A- 2008 086 073
JP-A- 2008 193 815     JP-A- 2008 263 713
US-A1- 2008 012 539**

## Description

### Technical Field

The present invention relates to a power supply device that converts AC to DC.

### Background Art

A compressor that constitutes an air conditioner is controlled using a converter. Harmonic components contained in an input current to the converter are desirably reduced, and various methods have been proposed for this purpose (for example, Patent Document 1).

A configuration is also proposed in which after an AC voltage from an AC power supply reaches 0 V (hereinafter, this state is sometimes referred to as zero cross), the AC power supply is short-circuited for a certain time and then switched to an intermittent short-circuit, then after a set time has passed, the short-circuit of the AC power supply is opened until the next zero cross.

A configuration is also proposed in which the number of short-circuits of switching means for each half cycle of AC voltage variation from an AC power supply is changed depending on the load or frequency of an inverter to achieve a high power factor and a high boosting capacity.

A configuration is also proposed in which for each half cycle of AC voltage variation, a pulse width of a pulse signal that short-circuits an AC power supply is gradually changed so as to reduce changes in current flowing in a reactor.

A configuration is also proposed in which for each half cycle of AC voltage variation, switching means that short-circuits an AC power supply is switched a plurality of times at predetermined cycles.

A configuration is disclosed in which a harmonic reduction pulse is applied after a predetermined delay time has passed from zero cross of AC voltage variation (or AC current variation) of an AC power supply to increase a power factor.

### Citation List

Patent Document

Patent Document 1: Japanese Patent Laid-Open No. 2-299470
Patent Document 2: Japanese Patent application JP 2001 186770
Patent Document 3: US Patent application 2008/012539

### Summary of Invention

### Problems to be Solved by the Invention

However, although the various methods have been proposed as described above, improvement to further reduce harmonic components and increase a power factor has been always desired. Some methods require calculation with a heavy load to a control circuit in order to reduce harmonic components, and improvement needs to be made also in view of this matter.

The present invention is achieved in view of such technical problems, and has an object to provide a power supply device that can further reduce harmonic components contained in an input current.

### Solution to the Problems

In order to achieve the object, the present invention provides a power supply device including: rectification means that converts AC power input from an AC power supply into DC power and supplies the DC power to a load; an inductive element connected in series between an AC power supply input terminal and the rectification means; switching means that is connected in parallel between paths of an AC voltage applied via the inductive element to the rectification means, and performs opening and closing operations; smoothing means connected to a DC terminal side of the rectification means in parallel with the rectification means; zero cross detection means for detecting a zero cross point of a waveform of an AC voltage output from the AC power supply; and control means that controls the opening and closing operations of the switching means. The control means compares a predetermined reference waveform signal with a reference level to generate a drive pulse signal in order to cause the switching means to perform a plurality of opening

EP 2 456 062 B1

and closing operations at predetermined cycles. The drive pulse signal has a long pulse with a long opening time of the switching means, and a short pulse with a shorter opening time than the long pulse, the long pulse is generated by comparing the reference waveform signal with a first reference level, and the short pulse is generated by comparing the reference waveform signal with a second reference level different from the first reference level.

With such a power supply device, the long pulse and the short pulse are generated by comparison with the first reference level and the second reference level different from each other to easily provide different pulse widths.

For example, the control means generates a pulse for opening the switching means in the drive pulse signal when the reference waveform signal exceeds the first reference level or the second reference level. In this case, if the first reference level is set to be lower than the second reference level, a pulse generated by comparison with the first reference level can ensure a larger pulse width than a pulse generated by comparison with the second reference level even for the same waveform.

The long pulse is generated by comparing a trapezoidal wave contained in the reference waveform signal with the first reference level, and the short pulse is generated by comparing a triangular wave contained in the reference waveform signal with the second reference level different from the first reference level. This can ensure a large difference in pulse width between the long pulse and the short pulse.

The drive pulse signal may have a first pulse constituted by the long pulse and a second pulse and a third pulse constituted by the short pulses in a former half period of a half wavelength of the AC voltage waveform that starts from the zero cross point, and may have a fourth pulse constituted by the short pulse in a latter half period of the half wavelength of the AC voltage waveform.

In the reference waveform signal, the trapezoidal wave for generating the first pulse preferably maintains an ON state for a duration T1, and then has a falling time of the duration T1.

In the reference waveform signal, the triangular waves for generating the second pulse, the third pulse, and the fourth pulse preferably have the same duration T2.

The third pulse is preferably delayed from the second pulse by the same duration T2 as the duration T2 of the triangular wave for generating the second pulse.

The fourth pulse preferably rises at a timing when a time T3 from the zero cross point is $0.8T \leq T3 \leq 0.9T$, where T is a half wavelength of the AC voltage waveform.

With the configuration of the present invention, the first reference level and the second reference level are different from each other, thereby allowing the long pulse and the short pulse to have different pulse widths without shifting phases of the long pulse and the short pulse.

The first reference level and the second reference level may be fixed, but the first reference level and the second reference level may be varied during operation of the power supply device.

It is preferable that the power supply device further includes a load current detection unit that detects a load current supplied to the load, and the control means varies, depending on a magnitude of the load current detected by the load current detection unit, at least one of pulse widths of the first pulse, the second pulse, the third pulse, and the fourth pulse, a delay time of the second pulse from the first pulse, and a delay time of the fourth pulse from the zero cross point.

At this time, the control means preferably preliminarily stores information on the magnitude of the load current detected by the load current detection unit associated with at least one of set values of the pulse widths of the first pulse, the second pulse, the third pulse, and the fourth pulse, the delay time of the second pulse from the first pulse, and the delay time of the fourth pulse from the zero cross point. This reduces a calculation load in the control means.

**Advantageous Effects of Invention**

According to the present invention, the drive pulse signal for causing the switching means to perform the plurality of opening and closing operations at the predetermined cycles has the long pulse with the long opening time of the switching means and the short pulse with the short opening time, the long pulse is generated by comparing the reference waveform signal with the first reference level, and the short pulse is generated by comparing the reference waveform signal with the second reference level different from the first reference level. Thus, the long pulse and the short pulse are generated by comparison with the first reference level and the second reference level different from each other to easily provide different pulse widths. This can more effectively reduce harmonic components contained in an input current, and can increase a power factor. The reference waveform signal is compared with the first reference level and the second reference level of certain levels, thereby reducing a calculation load for generating the drive pulse signal.

**Brief Description of Drawings**

[Figure 1] Figure 1 shows a circuit configuration of a power supply device according to the present invention.
[Figure 2] Figure 2A shows a power supply voltage waveform of an AC power supply, Figure 2B shows a waveform of a drive pulse signal generated in a control circuit, and Figure 2C shows changes of an input current.
[Figure 3] Figure 3 shows a generation method of a drive pulse signal.

**Description of Embodiments**

Now, the present invention will be described in detail based on an embodiment shown in the accompanying drawings.

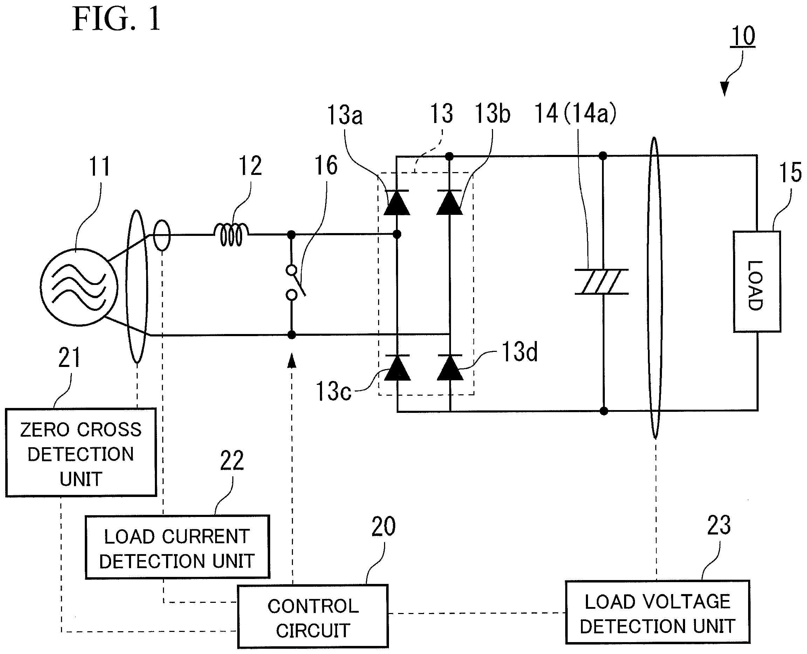

Figure 1 illustrates a circuit configuration of a power supply device 10 for controlling a compressor of an air conditioner according to this embodiment.

As shown in Figure 1, the power supply device 10 includes a reactor (inductive element) 12 connected in series with an AC power supply 11, a rectifier circuit (rectification means) 13 constituted by diode bridges 13a to 13d connected to the AC power supply 11 and the reactor 12, a smoothing circuit (smoothing means) 14 constituted by a capacitor 14a connected in parallel with the rectifier circuit 13, and a load 15 connected to the smoothing circuit 14.

The power supply device 10 also includes a switching member (switching means) 16 that short-circuits the AC power supply 11 via the reactor 12, and a control circuit (control means) 20 constituted by a microcomputer or the like that controls on/off of the switching member 16.

The power supply device 10 includes, at opposite ends of the AC power supply 11, a zero cross detection unit (zero cross detection means) 21 that detects a voltage of the AC power supply 11 to detect a zero cross point of the AC power supply 11, a load current detection unit 22 that detects a current supplied to the load 15 on an upstream side of the reactor 12, and a load voltage detection unit 23 that detects a DC voltage supplied to the load 15 on an upstream side of the load 15.

The control circuit 20 controls on/off of the switching member 16 in synchronization with changes (sine wave) in power supply voltage of the AC power supply 11 based on detection results of the zero cross detection unit 21, the load current detection unit 22, and the load voltage detection unit 23. The control circuit 20 generates a drive signal for driving the switching member 16 in synchronization with the zero cross point detected by the zero cross detection unit 21, and the drive signal is transmitted to a drive circuit (not shown) of the switching member 16 to turn on/off the switching member 16. Such an operation is achieved by the control circuit 20 performing a predetermined operation based on a program and a set value previously stored in the control circuit 20.

Next, the operation of the power supply device 10 will be described.

When the control circuit 20 outputs an ON signal in synchronization with the power supply voltage of the AC power supply 11, the switching member 16 is closed, the AC power supply 11 is short-circuited via the reactor 12 and the diode bridges 13a and 13d (or 13b and 13c) and a current starts to flow, and the current gradually increases. Then, when the control circuit 20 outputs an OFF signal in synchronization with the power supply voltage, the switching member 16 is opened, and the short-circuit current having flowing through the reactor 12 becomes a charging current for the capacitor 14a of the smoothing circuit 14 via the rectifier circuit 13 and starts to decrease. Then, when the power supply voltage of the AC power supply 11 reaches near a peak voltage, as in a conventional DC power supply device described above, the charging current of the capacitor 14a flows via the reactor 12 and the rectifier circuit 13 by action of the diode bridges 13a and 13d (or 13b and 13c). Then, a voltage charged to the capacitor 14a is applied to the load 15.

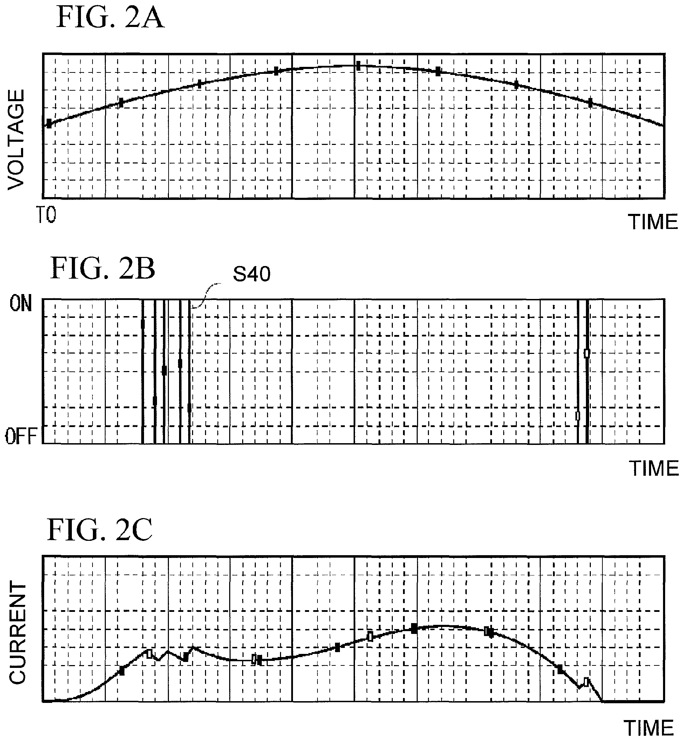

Figure 2 shows an operation waveform of each part at this time. Figure 2A shows a half cycle of a power supply voltage waveform of the AC power supply, Figure 2B shows a waveform of a drive pulse signal generated in the control circuit, and Figure 2C shows changes in input current.

The control circuit 20 generates and outputs the drive pulse signal as shown in Figure 2B, and details thereof will be described below.

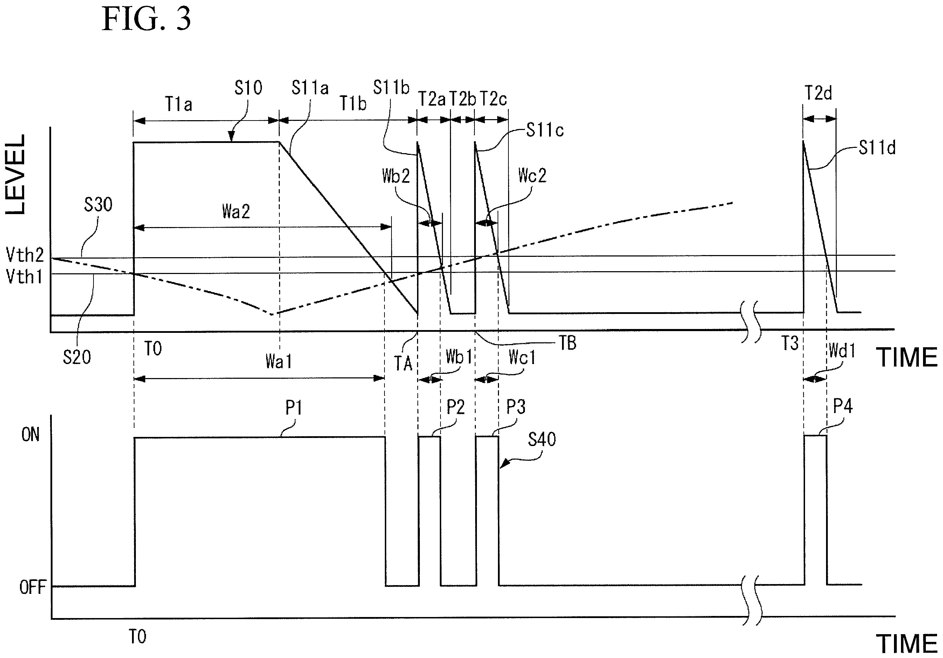

The control circuit 20 generates a reference waveform signal S10 as shown in Figure 3 in synchronization with the zero cross point detected by the zero cross detection unit 21. The reference waveform signal S10 includes a trapezoidal wave Slla, a first sawtooth wave (triangular wave) Sllb, a second sawtooth wave (triangular wave) Sllc, and a third sawtooth wave (triangular wave) S11d.

The trapezoidal wave Slla is generated in such a manner that a signal is turned on when the zero cross detection unit 21 detects the zero cross point (this time is a time T0), and after a delay of a duration T1a, a signal falls for a duration T1b (= T1a).

The first sawtooth wave Sllb is generated in such a manner that a signal is turned on at a time (= T1a + T1b) when the trapezoidal wave Slla has fallen, and the signal falls for a duration T2a.

The second sawtooth wave Sllc is generated in such a manner that a signal is turned on at a time (= T1a + T1b + T2a + T2b) delayed by a duration T2b (= T2a) from a time (= T1a + T1b + T2a) when the first sawtooth wave Sllb has fallen, and the signal falls for a duration T2c (T2c = T2a in this embodiment).

The third sawtooth wave S11d is generated in such a manner that a signal is turned on at a time when the time T3 has passed from the zero cross point after the second sawtooth wave Sllc, and the signal falls for a duration T2d (T2d = T2a in this embodiment).

The control circuit 20 compares the trapezoidal wave Slla, the first sawtooth wave Sllb, the second sawtooth wave Sllc, and the third sawtooth wave S11d of the reference waveform signal S10 generated as described above with a first reference level signal S20 and a second reference level signal S30 generated as described below to output a drive pulse signal S40.

The first reference level signal S20 has a certain level, and a first reference level (reference level) Vth1 of the first reference level signal S20 is calculated by the following expression:

$$\text{Vth1} = \text{trapezoidal wave amplitude} \times M \times$$

$$\text{Sin(T1b/T50} \times 360°)$$

where M is a predetermined coefficient representing a ratio to trapezoidal wave amplitude (for example, 80% of the trapezoidal wave amplitude), and T50 is a cycle of an AC power supply. For an AC power supply having a frequency of 50 Hz, T50 = 20 ms.

The second reference level signal S30 has a higher level than the first reference level signal S20, and a second reference level (reference level) Vth2 is calculated by the following expression:

$$\text{Vth2} = \text{sawtooth wave amplitude} \times M \times$$

$$\text{Sin((T1b+(T2a+T2b))/T50} \times 360°)$$

The first reference level signal S20 and the second reference level signal S30 are determined by the durations T1b, T2a and T2b as in the above expression. As the durations T2a and T2b, preset reference values are used. The durations T2a and T2b are preferably set to twice or more maximum order (for example, 40 order $\times$ 50 Hz) of harmonic measurement, and for example, may be given by T2a = T2b = 1/5 kHz = 200 $\mu$s.

As the duration T1b, a preset reference value is used immediately after startup of the power supply device 10. Then, based on a value of current supplied to the load 15 detected by the load current detection unit 22, a duration T1 (= T1a = T1b) associated with the current value is read from a previously stored table and used. As the time T3, similarly, a duration T3 associated with a current value is read from the previously stored table. Table 1 shows an example of the table.

[Table 1]

| INPUT CURRENT [A] | T1[msec] | | T3[msec] | |
|---|---|---|---|---|
| | POWER SUPPLY 50Hz | POWER SUPPLY 60Hz | POWER SUPPLY 50Hz | POWER SUPPLY 60Hz |
| 1.0 | 0.46 | 0.47 | 8.60 | 7.17 |
| 1.5 | 0.50 | 0.51 | 8.60 | 7.17 |
| 2.0 | 0.54 | 0.54 | 8.60 | 7.17 |
| 2.5 | 0.58 | 0.57 | 8.60 | 7.17 |
| 3.0 | 0.62 | 0.61 | 8.60 | 7.17 |
| 3.5 | 0.65 | 0.64 | 8.60 | 7.17 |
| 4.0 | 0.68 | 0.66 | 8.60 | 7.17 |
| 4.5 | 0.70 | 0.68 | 8.60 | 7.17 |
| 5.0 | 0.72 | 0.70 | 8.60 | 7.17 |
| 5.5 | 0.73 | 0.72 | 8.60 | 7.17 |
| 6.0 | 0.75 | 0.74 | 8.60 | 7.17 |
| 6.5 | 0.77 | 0.76 | 8.60 | 7.17 |

The duration T1 and the time T3 read from the table are used to calculate the first reference level Vth1 and the second reference level Vth2.

The control circuit 20 compares the first reference level Vth1 and the second reference level Vth2 calculated as described above with the trapezoidal wave Slla, the first sawtooth wave Sllb, the second sawtooth wave Sllc, and the third sawtooth wave S11d that constitute the reference waveform signal S10 to generate the drive pulse signal S40. In this respect, on/off of a pulse is determined under the following conditions:

trapezoidal wave S11a > first reference level Vth1: pulse ON
trapezoidal wave S11a < first reference level Vth1: pulse OFF
first sawtooth wave S11b > second reference level Vth2: pulse ON
first sawtooth wave S11b < second reference level Vth2: pulse OFF
second sawtooth wave S11c > second reference level Vth2: pulse ON
second sawtooth wave S11c < second reference level Vth2: pulse OFF
third sawtooth wave S11d > second reference level Vth2: pulse ON
third sawtooth wave S11d < second reference level Vth2: pulse OFF
An example of the drive pulse signal S40 thus generated is shown in Figures 2B and 3.
Originally, a sine wave and a triangular wave (sawtooth wave) are generally compared to generate a pulse signal. However, if the pulse signal is generated by comparing the triangular wave and the sine wave that change with time, a calculation load in a processing unit (microcomputer or the like) that constitutes the control circuit 20 is increased.

Thus, as described above, the first reference level Vth1 and the second reference level Vth2 are compared with the reference waveform signal S10 to generate a pulse signal, thereby reducing the calculation load in the control circuit 20.

However, in this case, processing using the first reference level Vth1 and the second reference level Vth2 may cause an error in pulse width of the pulse signal. Pulse widths of a first pulse (long pulse) P1 generated by the trapezoidal wave S11a and the first reference level Vth1, a second pulse (short pulse) P2 generated by the first sawtooth wave S11b and the second reference level Vth2, a third pulse (short pulse) P3 generated by the second sawtooth wave Sllc and the second reference level Vth2, and the fourth pulse (short pulse) P4 generated by the third sawtooth wave S11d and the second reference level Vth2 are denoted by Wa1, Wb1, Wc1 and Wd1, respectively. Pulse widths when the trapezoidal wave Slla, the first sawtooth wave S11b, the second sawtooth wave Sllc, and the third sawtooth wave S11d are compared with a sine wave X are denoted by Wa2, Wb2, Wc2 and Wd2. Then, errors in pulse widths of the first pulse P1, the second pulse P2, the third pulse P3, and the fourth pulse P4 are (Wa1-Wa2), (Wb1-Wb2), (Wc1-Wc2) and (Wd1-Wd2).

In this embodiment, the second pulse P2, the third pulse P3, and the fourth pulse P4 are controlled as having the same pulse width, and thus the second reference level Vth2 is given by Vth2 = sawtooth wave amplitude $\times$ M $\times$ Sin((T1b+(T2a+T2b))/T50$\times$360°) as described above.

In contrast to this, for example, in view of only the second pulse P2, accuracy is increased when Vth2 = sawtooth wave amplitude $\times$ M $\times$ Sin((T1b+T2a))/T50$\times$360°). However, in this embodiment, the second pulse P2, the third pulse P3, and the fourth pulse P4 are controlled as having the same pulse width (Wb1 = Wc1 = Wd1), and the second reference level Vth2 is determined by the above expression. This can reduce errors in all the second pulse P2, the third pulse P3, and the fourth pulse P4.

The control circuit 20 outputs the drive pulse signal S40 thus generated, and thus an input current to the load 15 closely resembles the sine wave as shown in Figure 2C, thereby effectively reducing harmonics.

At this time, the control circuit 20 generates the drive pulse signal S40 by comparing the trapezoidal wave Slla, the first sawtooth wave Sllb, the second sawtooth wave Sllc, and the third sawtooth wave S11d that constitutes the reference waveform signal S10 with the first reference level Vth1 and the second reference level Vth2. As such, the reference waveform signal S10 is compared with the first reference level Vth1 and the second reference level Vth2 of a certain level rather than with the sine wave, thereby reducing a calculation load in the control circuit 20.

Constantly fixing the number of pulses of the drive pulse signal S40 and fixing the widths of the second pulse P2 to fourth pulse P4 can also reduce the calculation load in the control circuit 20.

For the generated drive pulse signal S40, in a former half period of a half cycle of the power supply voltage, the first pulse P1 with a long short-circuit duration is output and then the second pulse P2 and the third pulse P3 with short short-circuit durations are output, and in a latter half period, the fourth pulse P4 with a short short-circuit duration is output. In particular, the fourth pulse P4 in the latter half period allows a waveform of the input current to the load 15 to closely resemble the sine wave. The third sawtooth wave S11d for generating the fourth pulse P4 is controlled in timing by the time T3 independently of the trapezoidal wave Slla, the first sawtooth wave Sllb, and the second sawtooth wave Sllc. In this embodiment, a range of the time T3 for generating the fourth pulse P4 is preferably $0.8T \leq T3 \leq 0.9T$, and more preferably $0.85T \leq T3 \leq 0.9T$, where T is a half cycle of power supply voltage variation.

Further, the third pulse P3 can increase a harmonic reduction effect.

Adjustment of an interval between the second pulse P2 and the third pulse P3 can be chosen to provide a maximum harmonic reduction effect, or can reduce electromagnetic sound of a reactor caused by controlling a plurality of pulses although the harmonic reduction effect is slightly reduced (a balance between the harmonic reduction effect and the reactor electromagnetic sound reduction effect can be adjusted by setting of the duration T2b as required).

As described above, according to the power supply device 10 of this embodiment, a calculation load in the control circuit 20 can be reduced, and harmonic components contained in the input current can be effectively reduced.

In the above-described embodiment, generation of the drive pulse signal S40 in the control circuit 20 of the power supply device 10 has been described. However, it is understood that the set values or the like may be changed without departing from the gist of the present invention.

The first reference level Vth1 is set lower than second reference level Vth2 to increase the pulse width of the first pulse P1 and ensure a long short-circuit time. However, also for the other pulses, a long or short short-circuit time may be ensured by providing different levels. Further, three or more different reference levels may be used.

**Reference Signs List**

10 ... power supply device,
11 ... AC power supply,
12 ... reactor (inductive element),
13 ... rectifier circuit (rectification means),
13a to 13d ... diode bridge,
14 ... smoothing circuit (smoothing means),
14a ... capacitor,
15 ... load,
16 ... switching member (switching means),
20 ... control circuit (control means),
21 ... zero cross detection unit (zero cross detection means),
22 ... load current detection unit,
23 ... load voltage detection unit,
P1 ... first pulse (long pulse),
P2 ... second pulse (short pulse),
P3 ... third pulse (short pulse),
P4 ... fourth pulse (short pulse),
S10 ... reference waveform signal,
S11a ... trapezoidal wave,
S11b, S11c, S11d ... sawtooth wave (triangular wave),
S20 ... first reference level signal,
S30 ... second reference level signal,
S40 ... drive pulse signal,
T0 ... time,
T1, T1a, T1b ... duration,
T2, T2a, T2b, T2c, T2d ... duration,
T3 ... time,
Vth1 ... first reference level (reference level),
Vth2 ... second reference level (reference level)

**Claims**

1. A power supply device (10) comprising:

rectification means (13) that converts AC power input from an AC power supply (11) into DC power and supplies the DC power to a load (15);
an inductive element (12) connected in series between an AC power supply (11) input terminal and the rectification means (13);
switching means (16) that is connected in parallel between paths of an AC voltage applied via the inductive element (12) to the rectification means (13), and performs opening and closing operations;

smoothing means (14,14a) connected to a DC terminal side of the rectification means (13) in parallel with the rectification means;

zero cross detection means (21) for detecting a zero cross point of a waveform of an AC voltage output from the AC power supply; and

control means (20) that controls the opening and closing operations of the switching means (16), wherein the control means (20) compares a predetermined reference waveform signal (S10) with a reference level (Vth1,Vth2) to generate a drive pulse signal (S40) in order to cause the switching means (16) to perform a plurality of opening and closing operations at predetermined cycles,

the drive pulse signal (S40) has a long pulse (P1) with a long opening time of the switching means (16), and a short pulse (P2,P3,P4) with a shorter opening time than the long pulse (P1), the long pulse (P1) is generated by comparing the reference waveform signal (S10) with a first reference level (Vth1), and the short pulse (P2,P3,P4) is generated by comparing the reference waveform signal (S10) with a second reference level (Vth2) different from the first reference level (Vth1).

**characterised in that** the long pulse (P1) is generated by comparing a trapezoidal wave (S11a) contained in the reference waveform signal (S10) with the first reference level (Vth1), and the short pulse (P2,P3,P4) is generated by comparing a triangular wave (S11b,S11c,S11d) contained in the reference waveform signal (S10) with the second reference level (Vth2) different from the first reference level (Vth1).

2. The power supply device (10) according to claim 1, wherein the control means (20) generates a pulse for opening the switching means (16) in the drive pulse signal (S40) when the reference waveform signal (S10) exceeds the first reference level (Vth1) or the second reference level (Vth2), and

the first reference level (Vth1) is lower than the second reference level (Vth2),

3. The power supply device (10) according to any one of claims 1 or 2, wherein the drive pulse signal (S40) has a first pulse (P1) constituted by the long pulse and a second pulse (P2) and a third pulse (P3) constituted by the short pulses in a former half period of a half wavelength of the AC voltage waveform that starts from the zero cross point, and has a fourth pulse (P4) constituted by the short pulse in a latter half period of the half wavelength of the AC voltage waveform.

4. The power supply device (10) according to claim 3, wherein in the reference waveform signal (S10), the trapezoidal wave (11a) for generating the first pulse (P1) maintains an ON state for a duration T1, and then has a falling time of the duration T1.

5. The power supply device (10) according to claim 3 or 4, wherein in the reference waveform signal (S10), the triangular waves (S11b,S11c,S11d) for generating the second pulse (P2), the third pulse (P3), and the fourth pulse (P4) have the same duration T2.

6. The power supply device (10) according to claim 5, wherein the third pulse (P3) is delayed from the second pulse (P2) by the same duration T2 as the duration T2 of the triangular wave (S11b,S11c,S11d) for generating the second pulse (P2).

7. The power supply device (10) according to any one of claims 3 to 6, wherein the fourth pulse (P4) rises at a timing when a time T3 from the zero cross point is $0.8T \leq T3 \leq 0.9T$, where T is a half wavelength of the AC voltage waveform.

8. The power supply device (10) according to any one of claims 3 to 7, further comprising a load current detection unit (22) that detects a load current supplied to the load (15),

wherein the control means (20) varies, depending on a magnitude of the load current detected by the load current detection unit (22), at least one of

pulse widths of the first pulse (P1), the second pulse (P2), the third pulse (P3), and the fourth pulse (P4),

a delay time of the second pulse (P2) from the first pulse (P1), and

a delay time of the fourth pulse (P4) from the zero cross point.

9. The power supply device (10) according to claim 8, wherein the control means (20) preliminarily stores information on the magnitude of the load current detected by the load current detection unit (22) associated with at least one of set values of the pulse widths of the first pulse (P1), the second pulse (P2), the third pulse (P3), and the fourth pulse (P4), the delay time of the second pulse (P2) from the first pulse (P1), and

the delay time of the fourth pulse (P4) from the zero cross point.

**10.** The power supply device (10) according to any one of claim 8 or 9, wherein the control means (20) varies the first reference level (Vth1) and the second reference level (Vth2) depending on the magnitude of the load current detected by the load current detection unit (22).

**Patentansprüche**

**1.** Eine Stromversorgungseinrichtung (10) umfassend:

ein Gleichrichtmittel (13), das von einer Wechselstromversorgung (11) angelegten Wechselstrom in Gleichstrom umwandelt und damit einen Verbraucher (15) versorgt;

ein induktives Element (12), das zwischen einem Eingangsanschluss einer Wechselstromversorgung (11) und dem Gleichrichtmittel (13) in Reihe geschaltet ist;

ein Schaltmittel (16), das zwischen Pfaden einer über das induktive Element (12) angelegten Wechselspannung parallel zum Gleichrichtmittel (13) geschaltet ist und Öffnungs- und Schließvorgänge ausführen kann;

ein Glättungsmittel (14, 14a), das parallel zum Gleichrichtmittel mit der Gleichstrom-Anschlussseite des Gleichrichtmittels (13) verbunden ist;

ein Nulldurchgangserkennungsmittel (21) zur Erkennung eines Nulldurchgangspunkts einer Wellenform einer von der Wechselstromversorgung ausgegebenen Wechselspannung; und

ein Steuermittel (20), das die Öffnungs- und Schließvorgänge des Schaltmittels (16) steuert,

wobei das Steuermittel (20) ein vorbestimmtes Referenzwellenformsignal (S10) mit einem Referenzpegel (Vth1, Vth2) vergleicht, um ein Ansteuerungsimpulssignal (S40) zu erzeugen, um das Schaltmittel (16) dazu zu veranlassen, eine Vielzahl von Öffnungs- und Schließvorgängen bei festgelegten Zyklen auszuführen,

das Ansteuerungsimpulssignal (S40) hat einen langen Impuls (P1) mit einer langen Öffnungsdauer des Schaltmittel (16) und einen kurzen Impuls (P2, P3, P4) mit einer im Vergleich zum langen Impuls (P1) kürzeren Öffnungsdauer, der lange Impuls (P1) wird erzeugt, indem das Referenzwellenformsignal (S10) mit einem ersten Referenzpegel (Vth1) verglichen wird, und der kurze Impuls (P2, P3, P4) wird erzeugt, indem das Referenzwellenformsignal (S10) mit einem zweiten Referenzpegel (Vth2), der von dem ersten Referenzpegel (Vth1) verschieden ist, verglichen wird.

**dadurch gekennzeichnet, dass** der lange Impuls (P1) erzeugt wird, indem eine trapezförmige Welle (11a), die im Referenzwellenformsignal (S10) enthalten ist, mit dem ersten Referenzpegel (Vth1) verglichen wird, und der kurze Impuls (P2, P3, P4) erzeugt wird, indem eine Dreieckwelle (S11b, S11c, S11d), die im Referenzwellenformsignal (S10) enthalten ist, mit dem zweiten Referenzpegel (Vth2), der von dem ersten Referenzpegel (Vth1) verschieden ist, verglichen wird.

**2.** Die Stromversorgungseinrichtung (10) nach Anspruch 1, wobei das Steuermittel (20) im Ansteuerungsimpulssignal (S40) einen Impuls zur Öffnung des Schaltmittels (16) erzeugt, wenn das Referenzwellenformsignal (S10) den ersten Referenzpegel (Vth1) oder den zweiten Referenzpegel (Vth2) überschreitet und der erste Referenzpegel (Vth1) niedriger ist als der zweite Referenzpegel (Vth2).

**3.** Die Stromversorgungseinrichtung (10) nach einem der Ansprüche 1 oder 2, wobei das Ansteuerungsimpulssignal (S40) einen ersten Impuls (P1) hat, der aus dem langen Impuls besteht, und einem zweiten Impuls (P2) und einen dritten Impuls (P3), die aus den kurzen Impulsen in einer vorangegangenen halben Periode der halben Wellenlänge der Wechselspannungswellenform, die am Nulldurchgangspunkt beginnt, bestehen, und einen vierten Impuls (P4), der aus dem kurzen Impuls in einer nachfolgenden halben Periode der Wellenlänge der Wechselspannungswellenform besteht.

**4.** Die Stromversorgungseinrichtung (10) nach Anspruch 3, wobei die trapezförmige Welle (11a) in dem Referenzwellenformsignal (S10) zur Erzeugung des ersten Impulses (P1) für die Dauer T1 einen Ein-Zustand beibehält und dann für die Dauer T1 eine Abfallzeit hat.

**5.** Die Stromversorgungseinrichtung (10) nach Anspruch 3 oder 4, wobei in dem Referenzwellenformsignal (S10), die Dreieckwellen (Sllb, Sllc, Slld) zur Erzeugung des zweiten Impulses (P2), des dritten Impulses (P3) und des vierten Impulses (P4) dieselbe Dauer T2 haben.

**6.** Die Stromversorgungseinrichtung (10) nach Anspruch 5, wobei der dritte Impuls (P3) von dem zweiten Impuls (P2) um dieselbe Dauer T2 wie die Dauer T2 der Dreieckwellen (S11b, S11c, S11d) zur Erzeugung des zweiten Impulses (P2) zeitlich beabstandet ist.

**7.** Die Stromversorgungseinrichtung (10) nach einem der Ansprüche 3 bis 6, wobei der vierte Impuls (P4) zu einem Zeitpunkt ansteigt, an dem eine Zeit T3 von dem Nulldurchgangspunkt $0,8T \leq T3 \leq 0,9T$ ist, wobei T eine halbe Wellenlänge der Wechselspannungswellenform beträgt.

**8.** Die Stromversorgungseinrichtung (10) nach einem der Ansprüche 3 bis 7, weiter umfassend eine Verbraucherstrom-Erkennungseinheit (22), die einen dem Verbraucher (15) zugeführten Verbraucherstrom erkennt, wobei das Steuermittel (20) abhängig von der Größenordnung des Verbraucherstroms, der von der Verbraucherstrom-Erkennungseinheit (22) erkannt wird, zumindest eines von folgenden ändert:

Impulsbreiten des ersten Impulses (P1), des zweiten Impulses (P2), des dritten Impulses(P3) und des vierten Impulses (P4),
eine Verzögerungszeit des zweiten Impulses (P2) vom ersten Impuls (P1),
und
eine Verzögerungszeit des vierten Impulses (P4) vom Nulldurchgangspunkt.

**9.** Die Stromversorgungseinrichtung (10) nach Anspruch 8, wobei das Steuermittel (20) Informationen über die Größenordnung des Verbraucherstroms, der von der Verbraucherstrom-Erkennungseinheit (22) detektiert wird, vorläufig speichert, wobei diese zumindest einem der folgenden Werte zugeordnet ist:
eingestellten Werten der Impulsbreiten des ersten Impulses (P1), des zweiten Impulses (P2), des dritten Impulses (P3) und des vierten Impulses (P4), der Verzögerungszeit des zweiten Impulses (P2) vom ersten Impuls (P1), und der Verzögerungszeit des vierten Impulses (P4) vom Nulldurchgangspunkt.

**10.** Die Stromversorgungseinrichtung (10) nach einem der Ansprüche 8 oder 9, wobei das Steuermittel (20) den ersten Referenzpegel (Vth1) und den zweiten Referenzpegel (Vth2) abhängig von der Größenordnung des Verbraucherstroms, der von der Verbraucherstrom-Erkennungseinheit (22) detektiert wird, ändert.

**Revendications**

**1.** Dispositif d'alimentation en puissance (10) comprenant :

un moyen de redressement (13) qui convertit une puissance AC en entrée depuis une alimentation en puissance AC (11) selon une puissance DC et qui fournit la puissance DC à une charge (15) ;
un élément inductif (12) qui est connecté en série entre une borne d'entrée de l'alimentation en puissance AC (11) et le moyen de redressement (13) ;
un moyen de commutation (16) qui est connecté en parallèle entre des voies d'une tension AC qui est appliquée via l'élément inductif (12) sur le moyen de redressement (13), et qui réalise des opérations d'ouverture et de fermeture ;
un moyen de lissage (14, 14a) qui est connecté à un côté de borne DC du moyen de redressement (13) en parallèle au moyen de redressement ;
un moyen de détection de passage par zéro (21) pour détecter un point de passage par zéro d'une forme d'onde d'une tension AC qui est émise en sortie depuis l'alimentation en puissance AC ; et
un moyen de commande (20) qui commande les opérations d'ouverture et de fermeture du moyen de commutation (16) ; dans lequel :

le moyen de commande (20) compare un signal de forme d'onde de référence prédéterminé (S10) à un niveau de référence (Vth1, Vth2) de manière à générer un signal impulsionnel de pilotage (S40) afin de forcer le moyen de commutation (16) à réaliser une pluralité d'opérations d'ouverture et de fermeture selon des cycles prédéterminés ;
le signal impulsionnel de pilotage (S40) comporte une impulsion longue (P1) avec un temps d'ouverture long du moyen de commutation (16), et une impulsion courte (P2, P3, P4) avec un temps d'ouverture plus court que l'impulsion longue (P1), l'impulsion longue (P1) est générée en comparant le signal de forme d'onde de référence (S10) avec un premier niveau de référence (Vth1), et l'impulsion courte (P2, P3, P4) est générée en comparant le signal de forme d'onde de référence (S10) avec un second niveau de référence (Vth2) qui est différent du premier niveau de référence (Vth1) ;
**caractérisé en ce que** :
l'impulsion longue (P1) est générée en comparant une onde trapézoïdale (SIIa) qui est contenue dans le signal de forme d'onde de référence (S10) avec le premier niveau de référence (Vth1), et l'impulsion courte (P2, P3, P4) est générée en comparant une onde triangulaire (S11b, S11c, S11d) qui est contenue dans le signal de forme d'onde de référence (S10) avec le second niveau de référence (Vth2) qui est différent du premier niveau de référence (Vth1).

2. Dispositif d'alimentation en puissance (10) selon la revendication 1, dans lequel :

le moyen de commande (20) génère une impulsion pour ouvrir le moyen de commutation (16) dans le signal impulsionnel de pilotage (S40) lorsque le signal de forme d'onde de référence (S10) excède le premier niveau de référence (Vth1) ou le second niveau de référence (Vth2) ; et
le premier niveau de référence (Vth1) est inférieur au second niveau de référence (Vth2).

3. Dispositif d'alimentation en puissance (10) selon l'une quelconque des revendications 1 ou 2, dans lequel le signal impulsionnel de pilotage (S40) comporte une première impulsion (P1) qui est constituée par l'impulsion longue et une deuxième impulsion (P2) et une troisième impulsion (P3) qui sont constituées par les impulsions courtes dans une première demi-période d'une demi-longueur d'onde de la forme d'onde de tension AC qui démarre depuis le point de passage par zéro, et comporte une quatrième impulsion (P4) qui est constituée par l'impulsion courte dans une seconde demi-période de la demi-longueur d'onde de la forme d'onde de tension AC.

4. Dispositif d'alimentation en puissance (10) selon la revendication 3, dans lequel, dans le signal de forme d'onde de référence (S10), l'onde trapézoïdale (11a) pour générer la première impulsion (P1) conserve un état d'activation pendant une durée T1, puis présente un temps de décroissance de la durée T1.

5. Dispositif d'alimentation en puissance (10) selon la revendication 3 ou 4, dans lequel, dans le signal de forme d'onde de référence (S10), les ondes triangulaires (S11b, S11c, S11d) pour générer la deuxième impulsion (P2), la troisième impulsion (P3) et la quatrième impulsion (P4) présentent la même durée T2.

6. Dispositif d'alimentation en puissance (10) selon la revendication 5, dans lequel la troisième impulsion (P3) est retardée par rapport à la deuxième impulsion (P2) de la même durée T2 que la durée T2 de l'onde triangulaire (S11b, S11c, S11d) pour générer la deuxième impulsion (P2).

7. Dispositif d'alimentation en puissance (10) selon l'une quelconque des revendications 3 à 6, dans lequel la quatrième impulsion (P4) croît selon un cadencement lorsqu'un temps T3 depuis le point de passage par zéro est défini par $0,8\ T \leq T3 \leq 0,9\ T$, où T est une demi-longueur d'onde de la forme d'onde de tension AC.

8. Dispositif d'alimentation en puissance (10) selon l'une quelconque des revendications 3 à 7, comprenant en outre une unité de détection de courant de charge (22) qui détecte un courant de charge qui est alimenté sur la charge (15) ; dans lequel :
le moyen de commande (20) fait varier, en fonction d'une amplitude du courant de charge qui est détecté par l'unité de détection de courant de charge (22), au moins l'un de:

des largeurs d'impulsion de la première impulsion (P1), de la deuxième impulsion (P2), de la troisième impulsion (P3) et de la quatrième impulsion (P4) ;
un temps de retard de la deuxième impulsion (P2) par rapport à la première impulsion (P1) ; et
un temps de retard de la quatrième impulsion (P4) par rapport au point de passage par zéro.

9. Dispositif d'alimentation en puissance (10) selon la revendication 8, dans lequel le moyen de commande (20) stocke de façon préliminaire une information concernant l'amplitude du courant de charge qui est détecté par l'unité de détection de courant de charge (22) en association avec au moins l'un de :

des valeurs établies des largeurs d'impulsion de la première impulsion (P1), de la deuxième impulsion (P2), de la troisième impulsion (P3) et de la quatrième impulsion (P4) ;
le temps de retard de la deuxième impulsion (P2) par rapport à la première impulsion (P1) ; et
le temps de retard de la quatrième impulsion (P4) par rapport au point de passage par zéro.

10. Dispositif d'alimentation en puissance (10) selon l'une quelconque des revendications 8 ou 9, dans lequel le moyen de commande (20) fait varier le premier niveau de référence (Vth1) et le second niveau de référence (Vth2) en fonction de l'amplitude du courant de charge qui est détecté par l'unité de détection de courant de charge (22).

FIG. 1

## FIG. 2A

## FIG. 2B

S40

## FIG. 2C

# FIG. 3

EP 2 456 062 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2299470 A
- JP 2001186770 A
- US 2008012539 A